# EUROPEAN PATENT SPECIFICATION

(11) **EP 0 360 611 B1**
(45) Date of publication and mention of the grant of the patent: **20.11.1996**
(21) Application number: 89309644.6
(22) Date of filing: 21.09.1989
(51) Int. Cl.: C08L 77/00, C08K 7/02, C08G 69/26

(54) **Polyamide resin compositions**
Polyamidharz-Zusammensetzungen
Compositions de résine polyamide

(30) Priority: 22.09.1988 JP 238430/88; 31.08.1989 JP 225754/89
(43) Date of publication of application: 28.03.1990
(60) Divisional application: 95120551.7
(73) Proprietor: MITSUI PETROCHEMICAL INDUSTRIES, LTD., Tokyo 100 (JP)
(72) Inventor: Sakai, Hideki Mitsui Petrochemical, Kuga-gun Yamaguchi (JP); Ishiwatari, Kazuo Mitsui Petrochemical, Kuga-gun Yamaguchi (JP); Ikejiri, Fumitoshi Mitsui Petrochemical, Kuga-gun Yamaguchi (JP)
(74) Representative: Cresswell, Thomas Anthony

(56) References cited:
- EP-A- 0 280 221
- EP-A- 0 299 444
- EP-A- 0 350 689
- DE-B- 1 197 615
- FR-A- 2 246 607
- US-A- 4 250 065
- PATENT ABSTRACTS OF JAPAN vol. 11, no. 106 (C-414)(2553) 03 April 1987, & JP-A-61 254 662
- PATENT ABSTRACTS OF JAPAN vol. 10, no. 276 (C-373)(2332) 19 September 1986, & JP-A-61 97356
- Kunststoff-Handbuch, Band VI, Polyamide,p.244
- Taschenbuch der Kunststoff-Additive, 2nd. edn,p.334, Carl Hanser Verlag 1983

## Description

This invention relates to a polyamide resin composition. Polyamide resins have well balanced properties and are in wide use as engineering plastics, in such applications as, for example, automobile or electric parts. In particular, aromatic polyamide resins composed of aromatic dicarboxylic acids, e.g., terephthalic acid, and aliphatic diamines, e.g., hexamethylenediamine, have higher melting points and higher mechanical properties than aliphatic polyamide resins, and thus they have a great expectation of use in much broader fields.

Aromatic polyamide resin compositions which contain fibrous reinforcements such as glass fibers to further improve the heat resistance or rigidity of the resins are also known.

However, the polyamide resins and their compositions have low fluidity as well as high melting points, so that it is necessary that they be molded or processed at high temperatures near to their thermal decomposition temperatures. Furthermore when the polyamide resins or their compositions are injection-molded, they produce large amounts of friction heat and very often they thermally decompose to lower molecular weight resins, which deteriorates the properties which the polyamide resins or their compositions originally possess. Therefore, it has been difficult to produce molded articles having thin walls or complicated shapes by injection molding because of the particularly large amount of friction heat liberated.

As a further defect, aromatic polyamide resin compositions in general have inferior mold-releasing properties, so that thin-walled molded articles are apt to be broken when they are released from molds.

As a still further defect, the aromatic polyamide resin compositions have low fluidity, and accordingly the supply of the compositions to molding machines from hoppers is not carried out smoothly in injection or extrusion molding. Thus, metering of the compositions has insufficient accuracy, and the resultant individual molded articles are apt to be uneven in quality.

There is described in Japanese Patent Laid-Open No. 61-188457 a polyamide resin composition for thin-walled articles which contains nylon 46, glass fibers in an amount of 10-80 parts by weight per 100 parts by weight of the resin, and a lubricant in an amount, of 0.001-1 parts by weight per 100 parts by weight of the total of the resin and the glass fibers. A further polyamide resin composition for thin-walled articles is described in Japanese Patent Laid-Open No. 61-188458 which contains nylon 46 and a lubricant such as bisamides, fatty acid salts of group I, II or III metals of the periodic table, polyethylene glycol, aliphatic carboxylic acids of 26-32 carbon atoms or their derivatives.

In these prior references, it is said that nylon 46, which has a high melting point, is improved in moldability, and that reduction of the molecular weight of the resin in molding is prevented.. The nylon 46 described therein includes mixtures or copolymers of nylon 46 with nylon 66/6T (terephthalic acid component) or nylon 66/6T/61 (isophthalic acid component).

However, these prior polyamide resin compositions contain nylon 46, which is one of the aliphatic polyamide resins, as a main component. Therefore, it is not expected that the heat resistance of aliphatic polyamide resin compositions would be improved to a great extent by incorporating small amounts of aromatic polyamide resins thereinto, compared with the original aliphatic polyamide resins.

Aromatic polyamide resins have much higher melting points, much higher molding temperatures and much higher heat deflection temperatures than aliphatic polyamide resins. Aromatic polyamide resins have different molecular structures from aliphatic polyamide resins. Therefore, nothing has heretobefore been known about improvement of moldability of compositions which contain aromatic polyamide resins as a main component

JP-A-61/254,662 discloses a thermoplastic resin composition comprising a polyamide resin, a fibrous reinforcement and zinc stearate as a lubricant. Although the polyamide resin is stated to be aromatic, the resin used is MXD-6 (trade mark), which is an aliphatic polyamide resin.

JP-A-61/097,356 also discloses a composition comprising a polyamide resin, tungsten powder, a fibrous reinforcement and a lubricant such as zinc stearate or stearic acid. Again, although the polyamide resin is stated to be aromatic, the resin used is MXD-6 (trade mark), which is an aliphatic polyamide resin.

EP-A-299,444 discloses a partly aromatic copolyamide containing (a) 40-90% by weight of terephthalic acid and hexamethylene diamine, (b) 0-50% by weight ∈-caprolactam and (c) 0-60% by weight adipic acid and hexamethylene diamine, the copolyamide containing at least 10% by weight of components (b) and (c). This copolyamide is mixed with glass fibres and a lubricant such as calcium stearate or stearyl stearate.

Kunststoff-Handbuch, Band VI, Polyamide, page 244 discloses the use of a higher fatty acid or a derivative thereof as a lubricant.

Taschenbuch der Kunststoff-Additive, 2nd ed., page 334, Carl Hanser Verlag, 1983 discloses the use of montan acid esters as an additive.

The present invention seeks to provide an aromatic polyamide resin composition which has excellent fluidity and mold-releasing properties, as well as high heat resistance and rigidity. The present invention also seeks to provide a composition in which reduction of molecular weight in molding is prevented.

In accordance with the invention, there is provided an aromatic polyamide resin composition which comprises:
(A) at least one aromatic polyamide resin consisting of (a) an aromatic dicarboxylic acid component which consists of terephthalic acid in an amount of 40 to 100 mole% and optionally at least one aromatic dicarboxylic acid other than terephthalic acid in an amount of 60-0 mole%, and (b) a diamine component comprising at least one aliphatic diamine or alicyclic diamine;
(B) optionally a fibrous reinforcement in an amount of 0-200 parts by weight per 100 parts by weight of the aromatic polyamide resin; and
(C) at least one additive which is a partially saponified ester or a metal salt of an aliphatic carboxylic acid of 26-32 carbons in an amount of 0.01-5 parts by weight per 100 parts by weight of the aromatic polyamide resin.

The present invention also provides molded articles of a polyamide resin composition as defined above.

The aromatic polyamide resin used consists of a dicarboxylic acid component and a diamine component. The dicarboxylic acid component consists of terephthalic acid as a first aromatic dicarboxylic acid component and optionally at least one other aromatic dicarboxylic acid as a second aromatic dicarboxylic acid component. There may be mentioned as such second aromatic dicarboxylic acid components, for example, isophthalic acid, phthalic acid, 2-methylterephthalic acid or naphthalene dicarboxylic acid.

Isophthalic acid or naphthalene dicarboxylic acid is especially preferred as the second aromatic dicarboxylic acid component, and isophthalic acid is the most preferred.

When the polyamide resins used consist of the dicarboxylic acid component and diamine component in specific amounts as set forth above, the resultant resin compositions provide molded articles which have high heat resistance, and hence high resistance to heat degradation or high thermal deflection temperature, as well as good mechanical properties such as tensile strength, flexural strength or wear resistance, chemical resistance or water resistance.

The diamine component used may be an aliphatic diamine or an alicyclic diamine, or a mixture of these. The aliphatic diamine may be linear or branched. Preferred diamines are linear or branched alkylene diamines of 4-25 carbons, most preferably of 6-18 carbons. Thus, the preferred linear alkylene diamines may be exemplified by 1,6-diaminohexane, 1,7-diaminoheptane, 1,8-diaminooctane, 1,9-diaminononane, 1,10-diaminodecane, 1,11-diaminoundecane or 1,12-diaminododecane component. The preferred branched alkylene diamine component may be exemplified by 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diamino-2,5-dimethylhexane, 1,6-diamino-2,4-dimethylhexane, 1,6-diamino-3,3-dimethylhexane, 1,6-diamino-2,2-dimethylhexane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyioctane, 1,8-diamino-2,2-dimethyloctane, 1,8-diamino-3,3-dimethyloctane, 1,8-diamino-4,4-dimethyloctane, 1,6-diamino-2,4-diethylhexane or 1,9-diamino-5-methylnonane.

Among the diamines referred to above, the linear alkylene diamines are preferred, and in particular, 1,6-diaminohexane, 1,8-diaminooctane, 1,10-diaminodecane or 1,12-diaminododecane, or a mixture of two or more of these.

The alicyclic diamines used, in turn, are usually of 6-25 carbons, and contain at least one alicyclic ring. These may be exemplified by 1,3-diaminocyclohexane, 1,4-diaminocyclohexane, 1,3-bis(aminomethyl)-cyclohexane, 1,4-bis(aminomethyl)cyclohexane, isophoronediamine, piperazine, 2,5-dimethylpiperazine, bis(4-aminocyclohexyl)methane, bis(4-aminocyclohexyl)propane, 4,4'-diamino-3,3'-dimethyidicyclohexylmethane, 4,4'-diamino-3,3'-dimethyldicyclohexylpropane, 4,4'-diamino-3,3'-dimethyl-5,5'-dimethyldicyclohexylmethane, 4,4'-diamino-3,3'-dimethyl-5,5'-dimethyldicyclohexylpropane, α,α'-bis(4-aminocyclohexyl)-p-diisopropylbenzene, α,α'-bis(4-aminocyclohexyl)-m-diisopropylbenzene, α,α'-bis(4-aminocyclohexyl)-1,4-diisopropylcyclohexane or α,α'-bis(4-aminocyclohexyl)-1,3-diisopropylcyclohexane.

Among the alicyclic diamines as referred to above preferred are bis(aminomethyl)cyclohexanes, bis(4-aminocyclohexyl)methane or 4,4'-diamino-3,3'-dimethyldicyclohexylmethane. Bis(4-aminocyclohexyl)methane, 1,3-bis(aminocyclohexyl)methane or 1,3-bis(aminomethyl)-cyclohexane are the most preferred.

In accordance with the invention, when the dicarboxylic acid component is mainly composed of terephthalic acid, and more specifically when the dicarboxylic acid component contains the terephthalic acid preferably in amounts of not less than 60 mole %, the diamine component is preferably composed of aliphatic diamines as described hereinbefore. It is preferred that the amount of the terephthalic acid in the dicarboxylic acid components be defined by the number of carbons in the aliphatic diamine component.

More specifically, when the aliphatic diamine component is composed of carbon chains of 5-11 carbons, it is preferred that the terephthalic acid be contained in amounts of 50-100 mole % of the dicarboxylic acid component. The other dicarboxylic acids are accordingly contained in amounts of 50-0 mole % in the dicarboxylic acid component, and they may be any one of the second aromatic dicarboxylic acids.

In more detail, when the aliphatic diamine component is composed of short linear carbon chains of 5-7 carbons, it is preferred that the terephthalic acid be contained in amounts of 50-85 mole % in the dicarboxylic acid component. The other dicarboxylic acids are accordingly contained in amounts of 50-15 mole % in the dicarboxylic acid component, and they may be any one of the second aromatic dicarboxylic acids.

When the aliphatic diamine component is composed of intermediate length of carbon chains of 6-11 carbons, preferably of 6-10 carbons, it is preferred that the terephthalic acid be contained in amounts of 50-100 mole % in the dicarboxylic acid component. The other dicarboxylic acid may be any one of the second aromatic dicarboxylic acids and is contained in amounts of 50-0 mole % in the dicarboxylic acid component.

On the other hand, when the aliphatic diamine componen is composed of relatively long carbon chains of 10-18 carbons, then it is preferred that the terephthalic acid be contained in amounts of 75-100 mole % in the dicarboxylic acid component. The other dicarboxylic acid may be any one of the second aromatic dicarboxylic acids and is contained in amounts of 25-0 mole % in the dicarboxylic acid component.

As set forth above, when the amounts of the terephthalic acid and other aromatic dicarboxylic acid in the dicarboxylic acid component are specified in accordance with the number of carbons in the aliphatic diamine component, the resultant resin composition not only has good moldability, but also molded articles there of have good heat resistance, and hence good resistance to heat degradation and high thermal deflection temperature, and have excellent mechanical properties such as flexural strength or wear resistance.

The diamine component may contain aromatic diamines in addition to the alkylene diamine. There may be mentioned as such aromatic diamines, for example, m-xylylenediamine or p-xylylenediamine.

The polyamide resin used in the composition of the invention usually has an intrinsic viscosity [η] of not less than 0.5 dl/g, preferably not less than 0.6 dl/g, most preferably in the range of 0.7-3.0 dl/g, as measured in concentrated sulfuric acid at a temperature of 30°C.

The abovementioned polyamide resin may be produced by condensation polymerization in solution of a dicarboxylic acid halide and a diamine corresponding to the dicarboxylic acid and diamine components as described hereinbefore, as already described, for example, in P. W. Morgan, Polymer Reviews, 10, Condensation Polymers by Interfacial and Solution Methods, Interscience Publishers (1965) or Makromol. Chem., 47, 93-113 (1961). A known interfacial method also provides the above polyamide resin.

The polyamide resin may also be produced by melt methods, wherein an aromatic dicarboxylic acid and a diamine or its polyamide salt correspondening to the aromatic dicarboxylic acid component and diamine component, respectively, are polycondensed together in the presence or absence of a solvent such as water. As a further method, oligomers are first produced by, for example, solution methods, and then the oligomers are polycondensed in the solid phase.

The polyamide resin composition of the invention may optionally contain fibrous reinforcements so as to be of higher heat resistance and rigidity. The fibrous reinforcements used include, for example, various organic fibers and inorganic fibers such as glass fibers, carbon fibers, potassium titanate fibers, wollastonite ceramics fibers, metal coated glass fibers, metal carbide fibers or metal fibers. Inorganic fibers are preferred on account of their high heat resistance, and glass fibers are especially preferred on account of high reinforcing effect. The fibrous reinforcements may in advance be treated with silane coupling agents such as vinyltriethoxysilane, 2-aminopropyltriethoxysilane or 2-glycidoxypropyltrimethoxy-silane.

The fibrous reinforcements may be contained in amounts of not more than 200 parts by weight, preferably not more than 150 parts by weight, per 100 parts by weight of the aromatic polyamide resin in the composition. The use in excessive amounts reduces the fluidity of the composition which makes its molding difficult.

The polyamide resin composition of the invention contains at least one additive which is a partially saponified ester or a metal salt of an aliphatic carboxylic acid of 26-32 carbons. The metal salt is preferably an alkali or alkaline earth metal salt.

The additive improves fluidity in hoppers, melt fluidity and mold releasing properties of the resultant compositions, and prevents thermal decomposition of the polyamide resins to low molecular weight resins, so that the resultant resin composition permits the production of thin-walled molded articles.

The partially saponified esters of aliphatic carboxylic acids of 26-32 carbons include, for example, such esters of aliphatic carboxylic acids such as cerotic acid, montanic acid or melissic acid, with aliphatic polyhydric alcohols. The metal salts are preferably alkali or alkaline earth metal salts, for example of the aliphatic carboxylic acids. Specific preferred examples are calcium montanate, sodium montanate, lithium montanate or partially potassium saponified products of butylene glycol esters of montanic acid. The additives may be used singly or as a mixture of two or more.

The additives are contained in amounts of 0.01-5 parts by weight, preferably 0.05-1 parts by weight, per 100 parts by weight of the aromatic polyamide resin. When the amount of the additives is less than 0.01 parts by weight per 100 parts by weight of the aromatic polyamide resin, the resultant resin composition still has inferior moldability, whereas when the amount of the additives is more than 5 parts by weight, the resultant resin composition tends to have reduced mechanical properties.

The composition of the invention may be produced by any conventional method, and may contain, if desired, other additives such as heat stabilizers, weather stabilizers, fire retardants, antistatic agents, nucleating agents, colourants, blowing agents or fillers, in amounts which cause no detrioration of desired properties of the composition.

The invention will now be further described in the following Examples.

### EXAMPLES 1-5 and COMPARATIVE EXAMPLES 1-10

A heat resistant aromatic polyamide resin was prepared composed of an acid component containing 70 mole % terephthalic acid and 30 mole % isophthalic acid and a diamine component consisting of 100 mole % of 1,6-diaminohexane. The resin was found to have an intrinsic viscosity [η] of 1.0 g/dl as measured in concentrated sulfuric acid at 30°C and a melting point of 325°C as measured by a DSC method. The polyamide is hereinafter referred to as PA-1.

100 parts by weight of the polyamide was mixed with an additive below in amounts as shown in Table 1.
L-1: lithium stearate S7000 (Sakai Kagaku Kogyo K.K.)
L-2: calcium stearate (Nippon Yushi K.K.)
L-3: magnesium stearate (Nippon Yushi K.K.)
L-4: calcium 12-hydroxystearate CS600 (Kosei K.K.)
L-5: calcium montanate WAX CAW2 (Hoechst-Japan K.K.)
L-6: sodium montanate WAX NAW1 (Hoechst-Japan K.K.)
L-7: lithium montanate WAX LIW (Hoechst-Japan K.K.)
L-8: partially calcium saponified esters of montanic acid with butylene glycol WAX OP (Hoechst-Japan K.K.)
L-9: ethylenebisstearyl amide ALFLOW H50 (Nippon Yushi K.K.)
L-10: polyethylene glycol PEG 2000 (Wako Junyaku Kogyo K.K.)
L-11: polyethylene wax WAX PE190 (Hoechst-Japan K.K.)

The mixtures were melted and kneaded with a single screw extruder (30 mm diameter, 330°C) at an extrusion output of 8 kg/hr to provide pellets. Pressures of resins at the top of the extruder and intrinsic viscosity [η] of the pellets are shown in the Table 1. The pellets were injection-molded at 340°C with an injection molding machine (IS-50EP, Toshiba Kikai K.K.) to estimate the mold-releasing properties and melt fluidity. The results are shown in the Table 1.

The properties were measured as follows:

### Mold releasing properties:

Flat molds of 100 mm x 50 mm x 0.8 mm were used at 120°C. A: molded articles were readily released from the molds and no distortion was found; B: distortion was in part found; C: remarkable distortion was found as a whole.

### Melt fluidity:

Spiral flows were measured with spiral flow test molds at 70°C. The larger the spiral flow, the better the melt fluidity.

### Water absorption:

Specimens were immersed in water at 23°C for 24 hr and the increase in weight was measured in accordance with ASTM D570.

### Tensile strength:

Measured in accordance with ASTM D638.

### Tensile strength after water absorption:

Specimens were immersed in water at 23°C for 24 hr and then the tensile strength was measured as above.

### Thermal deflection temperature:

Measured under a load of 18.6 kg/cm² in accordance with ASTM D648.

### COMPARATIVE EXAMPLES 5-6

A polyamide resin was used which was composed of an acid component consisting of 100 mole % adipic acid and a diamine component consisting of 100 mole % 1,4-diaminobutane. The resin had an intrinsic viscosity [η] of 1.3 dl/g and a melting point of 292°C. The resin will hereinafter be referred to as PA-2.

The polyamide resins were mixed with the additives given above, and formed into pellets with a single screw extruder (30 mm diameter, 300°C) at an extrusion output of 8 kg/hr.

The pellets were then injection-molded at 320°C with the same injection molding machine as described before, to estimate the mold-releasing properties and melt fluidity. The results are shown in Table 1.

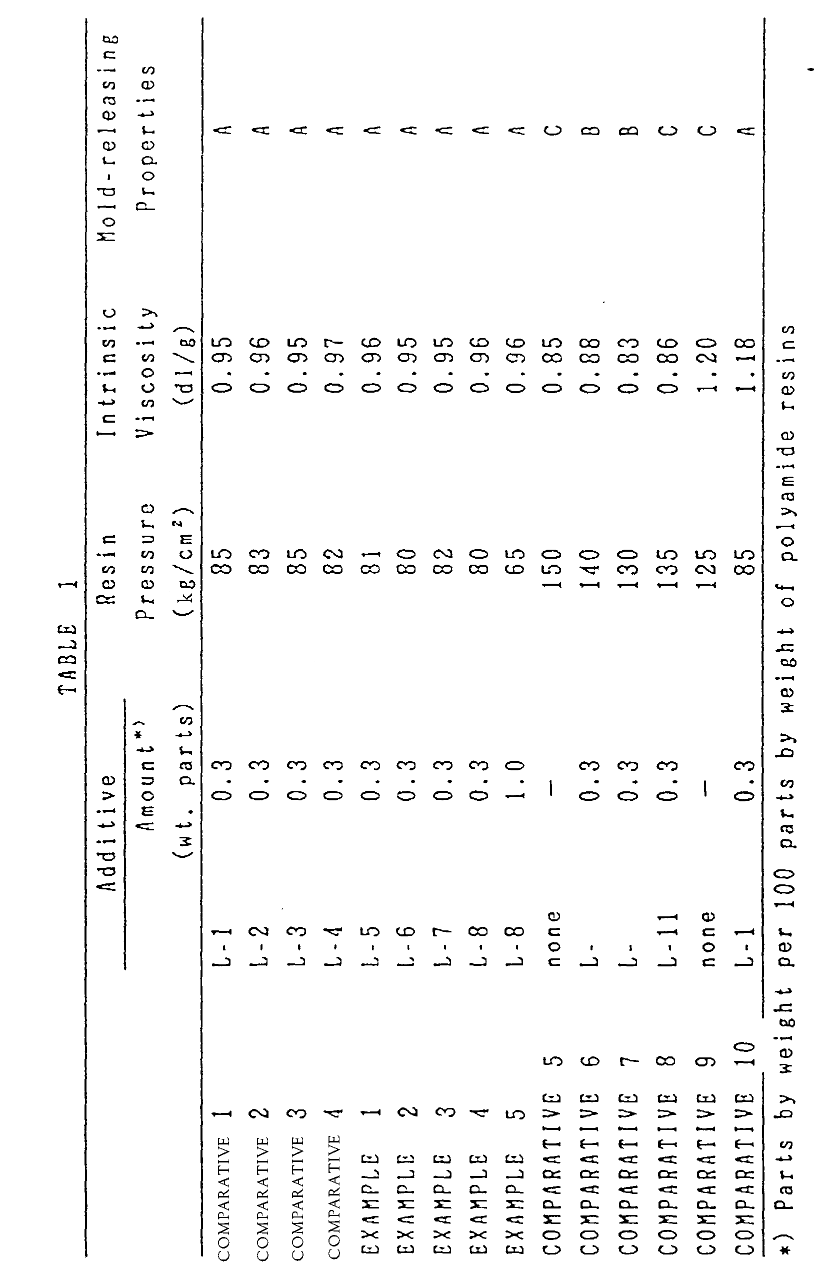

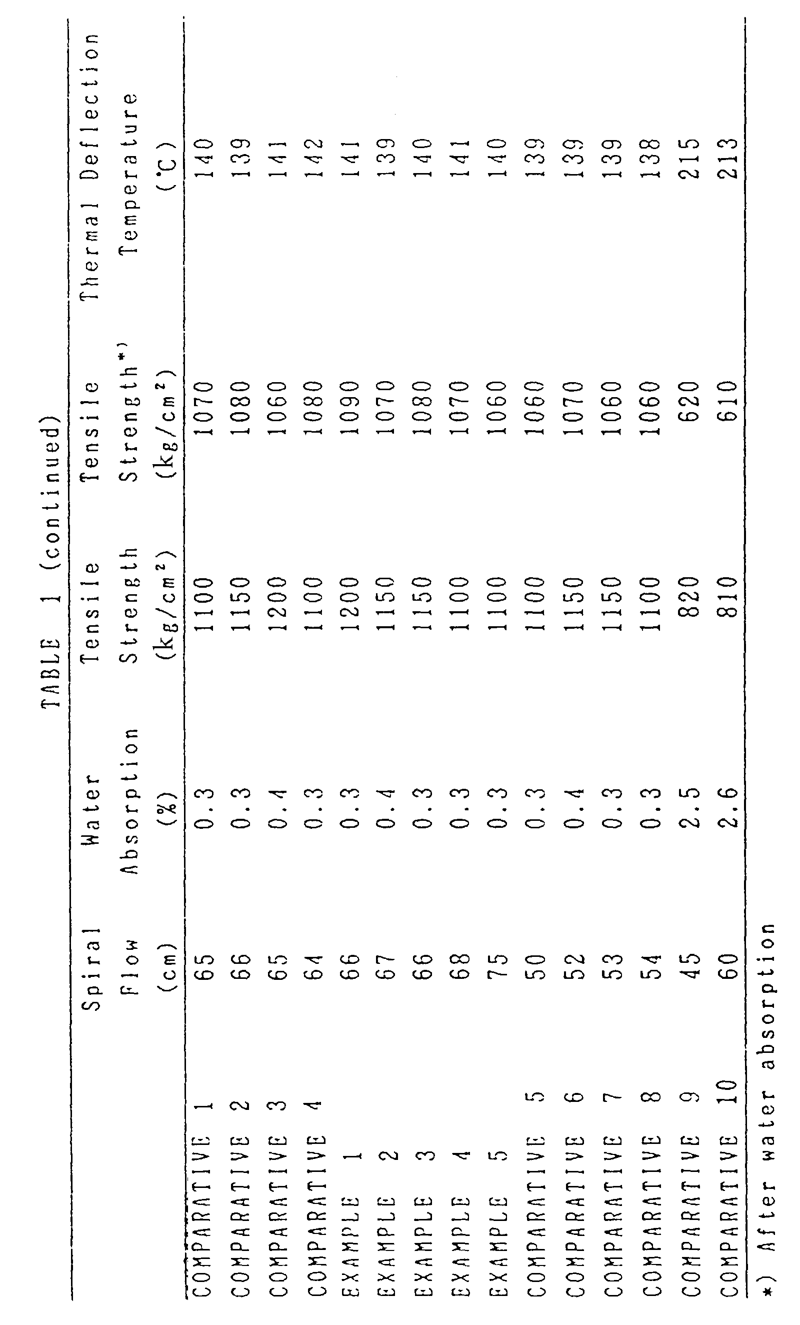

### EXAMPLES 6-10 and COMPARATIVE EXAMPLES 11-16

60 parts by weight of the resin PA-1 was mixed with 40 parts by weight of glass fibers (03MA486A, Asahi Fiber Glass K.K.) and additives in amounts shown in Table 2.

The mixtures were melted and kneaded with a twin screw vent type extruder (30 mm diameter, 330°C) at an extrusion output of 20 kg/hr to provide pellets. The electric power needed for the melting and kneading is shown in Table 2.

The pellets were injection-molded in the same manner as in the first EXAMPLES to estimate the mold-releasing properties and melt fluidity. The results are shown in Table 2.

### COMPARATIVE EXAMPLES 17-18

70 parts by weight of the resin PA-2 was mixed with 30 parts by weight of the same glass fibers as before, and additives in amounts shown in Table 2, and the mixtures were formed into pellets with a single screw extruder (30 mm diameter, 300°C) at an extrusion output of 8 kg/hr. The pellets were then injection-molded at 320°C with the same injection molding machine as described before, to estimate the mold-releasing properties and melt fluidity. The results are shown in Table 2.

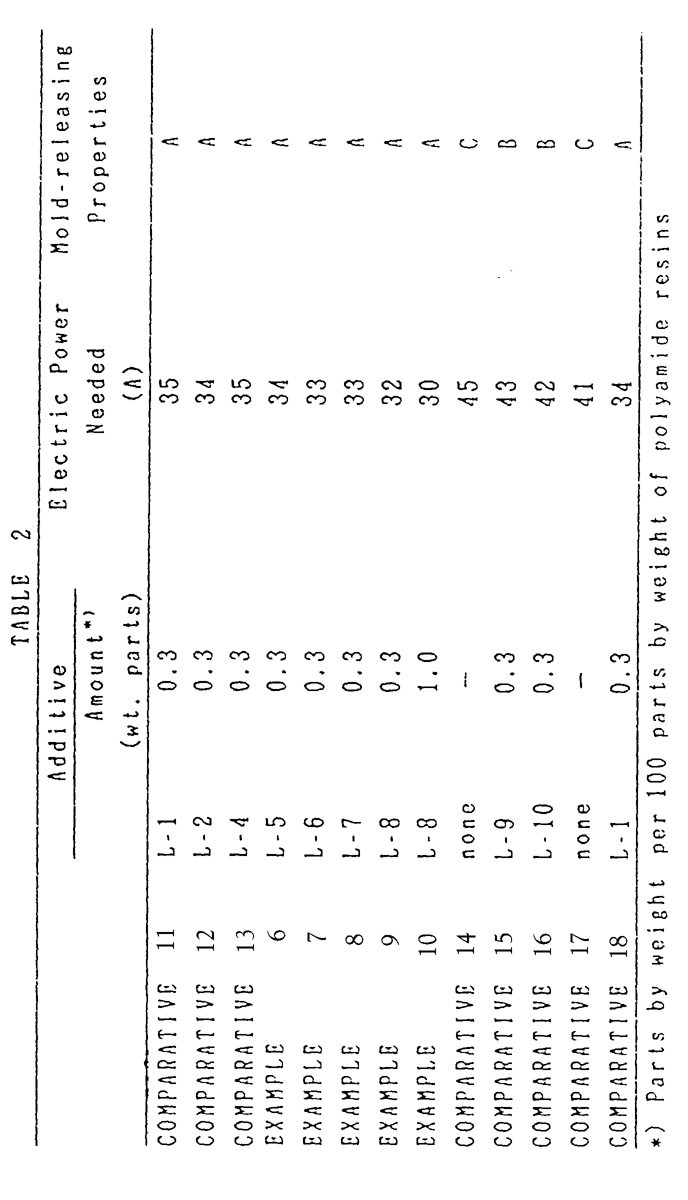

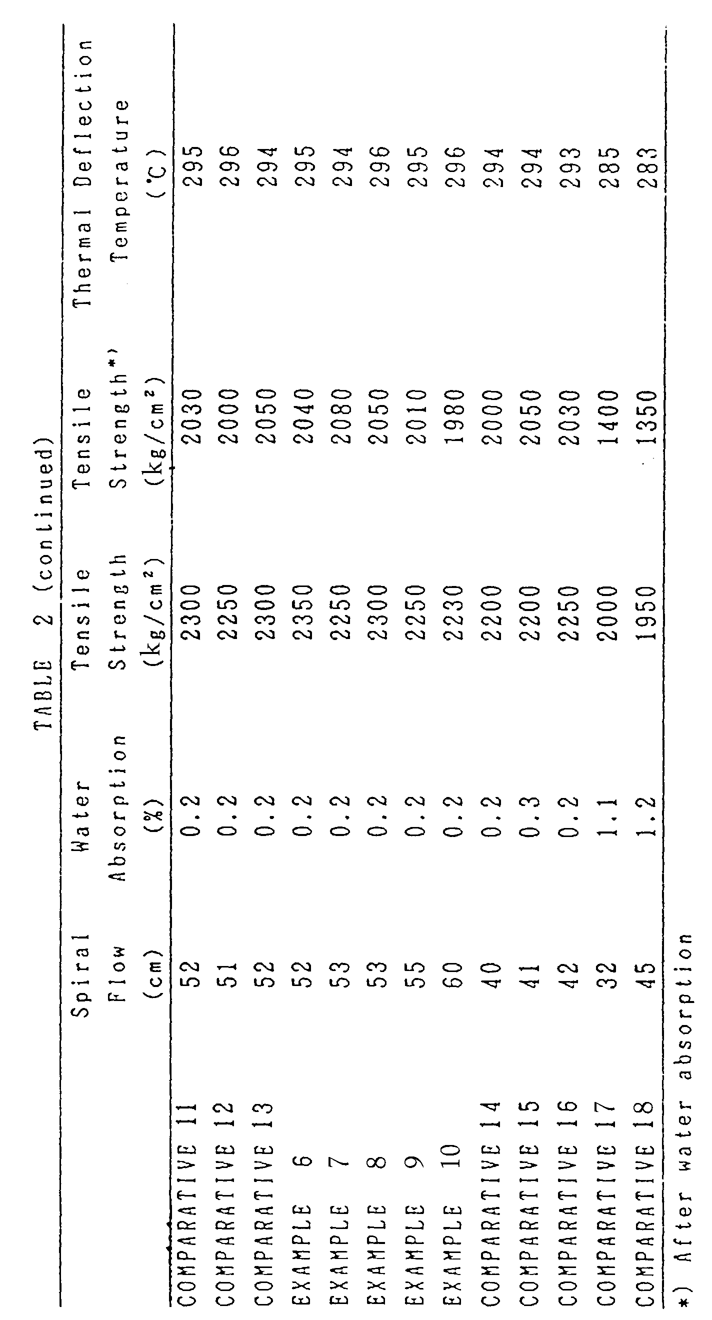

## Claims

1. An aromatic polyamide resin composition which comprises:
(A) at least one aromatic polyamide resin consisting of (a) an aromatic dicarboxylic acid component which consists of terephthalic acid in an amount of 40-100 mole% and optionally at least one aromatic dicarboxylic acid other than terephthalic acid in an amount of 60-0 mole% and (b) a diamine component comprising at least one aliphatic diamine or alicyclic diamine;
(B) optionally a fibrous reinforcement in an amount of 0-200 parts by weight per 100 parts by weight of the aromatic polyamide resin; and
(C) at least one additive which is a partially saponified ester or a metal salt of an aliphatic carboxylic acid of 26-32 carbons in an amount of 0.01-5 parts by weight per 100 parts by weight of the aromatic polyamide resin.

2. A polyamide resin composition according to claim 1, wherein the aromatic dicarboxylic acid component (a) contains terephthalic acid in an amount of 50-100 mole% and the optional other aromatic dicarboxylic acid in an amount of 50-0 mole%, and wherein the diamine component (b) is composed of at least one aliphatic diamine of 5-11 carbons.

3. A polyamide resin composition according to claim 1 or 2, wherein the diamine component (b) is composed of at least one aliphatic diamine of 6-10 carbons.

4. A polyamide resin composition according to claim 1, wherein the aromatic dicarboxylic acid component (a) contains terephthalic acid in an amount of 75-100 mole % and the optional other aromatic dicarboxylic acid in an amount of 25-0 mole %, and wherein the diamine component (b) is composed of at least one aliphatic diamine of 10-18 carbons.

5. A polyamide resin composition according to any one of the preceding claims wherein the polyamide resin (A) has an intrinsic viscosity of not less than 0.5 dl/g as measured in concentrated sulfuric acid at a temperature of 30°C.

6. A polyamide resin composition according to any one of the preceding claims wherein the fibrous reinforcement is glass fibers.

7. A polyamide resin composition according to claim 1 wherein the aromatic dicarboxylic acid component (a) contains at least 60 mole % of terephthalic acid.

8. Molded articles of a polyamide resin composition as claimed in any one of the preceding claims.

## Patentansprüche

1. Aromatische Polyamidharzmasse, umfassend
(A) mindestens ein aromatisches Polyamidharz, bestehend aus (a) einer aromatischen Dicarbonsäurekomponente, bestehend aus Terephthalsäure in einer Menge von 40-100 Mol-% und gegebenenfalls mindestens einer anderen aromatischen Dicarbonsäure als Terephthalsäure in einer Menge von 60-0 Mol-% und (b) einer Diaminkomponente, umfassend mindestens ein aliphatisches Diamin oder alicyclisches Diamin,
(B) gegebenenfalls eine faserförmige Verstärkung in einer Menge von 0-200 Gewichtsteilen auf 100 Gewichtsteile des aromatischen Polyamidharzes, und
(C) mindestens ein Additiv, das ein partiell verseifter Ester oder ein Metallsalz einer aliphatischen Carbonsäure mit 26-32 Kohlenstoffatomen ist, in einer Menge von 0,01-5 Gewichtsteilen auf 100 Gewichtsteile des aromatischen Polyamidharzes.

2. Polyamidharzmasse nach Anspruch 1, wobei die aromatische Dicarbonsäurekomponente (a) Terephthalsäure in einer Menge von 50-100 Mol-% und die gegebenenfalls vorhandene andere aromatische Dicarbonsäure in einer Menge von 50-0 Mol-% enthält und wobei die Diaminkomponente (b) aus mindestens einem aliphatischen Diamin mit 5-11 Kohlenstoffatomen besteht.

3. Polyamidharzmasse nach Anspruch 1 oder 2, wobei die Diaminkomponente (b) aus mindestens einem aliphatischen Diamin mit 6-10 Kohlenstoffatomen besteht.

4. Polyamidharzmasse nach Anspruch 1, wobei die aromatische Dicarbonsäurekomponente (a) Terephthalsäure in einer Menge von 75-100 Mol-% und die gegebenenfalls vorhandene andere aromatische Dicarbonsäure in einer Menge von 25-0 Mol-% enthält und wobei die Diaminkomponente (b) aus mindestens einem aliphatischen Diamin mit 10-18 Kohlenstoffatomen besteht.

5. Polyamidharzmasse nach einem der vorangehenden Ansprüche, wobei das Polyamidharz (A) eine Grundviskosität von nicht weniger als 0,5 dl/g, gemessen in konzentrierter Schwefelsäure bei einer Temperatur von 30°C, besitzt.

6. Polyamidharzmasse nach einem der vorangehenden Ansprüche, wobei die faserförmige Verstärkung Glasfasern sind.

7. Polyamidharzmasse nach Anspruch 1, wobei die aromatische Dicarbonsäurekomponente (a) mindestens 60 Mol-% Terephthalsäure enthält.

8. Formkörper aus einer Polyamidharzmasse nach einem der vorangehenden Ansprüche.

## Revendications

1. Composition de résine de polyamide aromatique qui comprend :
(A) au moins une résine polyamide aromatique se composant de (a) un composant de type acide dicarboxylique aromatique qui est constitué par un acide téréphtalique en une quantité de 40 à 100 % en moles et éventuellement par au moins un acide dicarboxylique aromatique autre que l'acide téréphtalique en une quantité de 60 à 0 % en moles, et de (b) un composant de type diamine comprenant au moins une diamine aliphatique ou diamine alicyclique ;
(B) éventuellement un agent de renforcement fibreux en une quantité de 0 à 200 parties en poids pour 100 parties en poids de résine polyamide aromatique ; et
(C) au moins un additif qui est un ester partiellement saponifié ou un sel métallique d'un acide carboxylique aliphatique comportant de 26 à 32 atomes de carbone en une quantité de 0,01 à 5 parties en poids pour 100 parties en poids de résine polyamide aromatique.

2. Composition de résine polyamide conforme à la revendication 1, dans laquelle le composant (a) de type acide dicarboxylique aromatique contient l'acide téréphtalique en une quantité de 50 à 100 % en moles et l'autre acide dicarboxylique aromatique facultatif en une quantité de 50 à 0 % en moles, et dans laquelle le composant (b) de type diamine est composé d'au moins une diamine aliphatique comportant de 5 à 11 atomes de carbone.

3. Composition de résine polyamide conforme à la revendication 1 ou 2, dans laquelle le composant (b) de type diamine est composé d'au moins une diamine aliphatique comportant de 6 à 10 atomes de carbone.

4. Composition de résine polyamide conforme à la revendication 1, dans laquelle le composant (a) de type acide dicarboxylique aromatique contient l'acide téréphtalique en une quantité de 75 à 100 % en moles et l'autre acide dicarboxylique aromatique facultatif en une quantité de 25 à 0 % en moles, et dans laquelle le composant (b) de type diamine est composé d'au moins une diamine aliphatique comportant de 10 à 18 atomes de carbone.

5. Composition de résine polyamide conforme à l'une quelconque des précédentes revendications, dans laquelle la résine polyamide (A) a une viscosité intrinsèque qui n'est pas inférieure à 0,5 dl/g, mesurée dans l'acide sulfurique concentré à une température de 30° C.

6. Composition de résine polyamide conforme à l'une quelconque des précédentes revendications, dans laquelle les fibres de verre servent d'agent de renforcement.

7. Composition de résine polyamide conforme à la revendication 1, dans laquelle le composant (a) de type acide dicarboxylique aromatique contient au moins 60 % en moles d'acide téréphtalique.

8. Articles moulés en composition de résine polyamide conforme à l'une quelconque des précédentes revendications.
